# EUROPEAN PATENT APPLICATION

(11) **EP 2 034 695 A1**
(43) Date of publication of application: **11.03.2009**
(21) Application number: 07017494.1
(22) Date of filing: 06.09.2007
(51) Int. Cl.: H04L 29/08

(54) **Multisite embodiment and operation**

(71) Applicant: Blue Order Technologies AG, 67657 Kaiserslautern (DE)
(72) Inventor: Schneider, Stephan, 67659 Kaiserslautern (DE)
(74) Representative: Müller-Boré & Partner Patentanwälte

(57) **Abstract**

The present description refers in particular to a computer-implemented method, a system and computer program product for data retrieval, archiving, and replication in a distributed system. The computer-implemented method may comprise:
receiving at least one request from at least one caller (22,24) at a service coordination layer (10), wherein the service coordination layer comprises one or more modules for coordinating the request between the caller (22,24) and one or more local sites (30-1,30-2) and remote sites (40-1,40-2);
by using at least one of the modules, sending the request to at least one of the local sites (30-1,30-2) and remote sites (40-1,40-2);
receiving a response from the at least one of the local sites (30-1,30-2) and remote sites (40-1,40-2); and
sending the response to the caller (22,24).

## Description

### Technical Field

The description is directed generally to distributed systems, in particular to media archiving systems distributed across a wide area network (WAN), and more particularly, to a computer-implemented method, system, and computer program product for data retrieval, archiving, and replication in a distributed environment.

### Background

Computer-based data management comprising integration, federation, querying, retrieving, archiving, and replication of large amounts of even complex data objects (e.g. media data or media content such as media assets) is a rather complex task, in particular, if the data is distributed across multiple sites (e.g. Web sites) such that data accessible via different (Web) services and stored in different heterogeneous storage systems such as databases and file systems. Accessing data from multiple sites comprises different operations having many aspects. For example, a primary site having a storage system should be replicated to improve security issues and/or to provide two or more sites having the same content. In another aspect, different data objects are stored across different (Web) sites comprising at least one service associated with at least one storage system. The interfaces to access the different services may vary as well as the underlying storage systems may be different. If a user wants to search across these different sites and having access to all data comprised in the sites, the different storage systems need to be federated. In a further aspect, multiple different sites generate data and/or content and want to share the generated data and/or content among each other.

Hence there is a need for providing distributed operations on large, distributed systems (e.g. a plurality of self-contained media archive systems) which support collecting, indexing, retrieval and distribution of rich and complex data objects such as media content or media assets across different systems and improve content-related workflows and maximize the return on content and/or data from the different systems.

### Summary

In one general aspect, a computer-implemented method for data retrieval, archiving, and replication in a distributed system may comprise:
receiving at least one request from at least one caller at a service coordination layer (or multi-site layer), wherein the service coordination layer comprises one or more modules for coordinating the request between the caller and one or more local sites and remote sites;
by using at least one of the modules, sending the request to at least some of the local sites and remote sites;
receiving a response from the at least some of the local sites and remote sites; and
sending the response to the caller.

In other words, a (service) coordination layer is provided for a distributed system. The distributed system may comprise at least one local server comprising one or more local sites and one or more remote servers each comprising one or more remote sites. A (local or remote) site may comprise at least one service such as a Web service and at least one storage system (e.g. a database or a file system) associated with a corresponding service. The coordination layer unites the distributed installation of the (local and remote) sites at a level that is above the services of each of the (local and remote) sites. The coordination layer enables a cooperation of a plurality of self-contained sites (e.g. media archiving systems) located at different servers of a network (e.g. a WAN such as the Internet). Accordingly, the coordination layer may distribute requests not only to (local) sites located at the local server of the coordination layer but also to (remote) sites located at one or more remote servers. A communication protocol for remote calls such as http or WS-RM (Web Service Remote Messaging) is used among the coordination layer and the (local and remote) sites as well as among the (local and remote) sites.

The coordination layer may be operable to contact components (e.g. services) on remote sites, i.e. services which are located in another domain than the coordination layer itself. A module of the coordination layer may subscribe to a foreign domain, are authorized and receive an access key. Subsequently, the domain name of the foreign service is resolved such that the module of the coordination layer receives the address of the service in the foreign domain.

Accordingly, providing a service coordination layer having features as described above, access to data from remote sites, communication in a distributed system comprising local and remote servers, as well as responding to requests against such a systems is enhanced. Furthermore, a user may request data from multiple (local and remote) sites a may receive a combined or merged response. Beyond, data replication and federation of the multiple (local and remote) sites is supported. Hence, the service coordination layer enables handling of identical and replicated data distributed across multiple (local and remote) sites. Data maintenance is thus enhanced for distributed systems.

According to another aspect, sending the request to at least some of the local sites and remote sites may be determined by the service coordination layer based upon: the request; the caller; at least one data manipulation operation comprised in the request; and/or at least one data object exchanged between the caller and the at least one of the local sites and remote sites.

Hence, requests can be distributed through the service coordination layer or at least one module of the service coordination layer to one or more (local or remote) sites depending on the type of the request and/or the content of the request. A type of the request may be a read-only operation or a read-and-write operation. A content of a request may be one or more data objects which are exchanged between the caller and one or more (local or remote) sites. Furthermore, the call itself may determine to which (local and remote) sites a request should be distributed.

According to yet another aspect, coordinating the request may comprise: performing at least one data manipulation operation on the local sites and remote sites.

According to yet another aspect, performing at least one data manipulation operation may comprise at least one of:
performing at least one read-only operation across the local sites and remote sites;
performing at least one read-and-write operation on the local sites and remote sites; and
performing at least one complex workflow operation on the local sites and remote sites.

A read-only operation may comprise a search or query operation on one or more data objects stored in one or more (local and remote) storage systems. A read-and-write operation may comprise a create, update, modify, write, and/or delete operation on one or more data objects stored in one or more (local and remote) storage systems. A complex work operation may comprise start, monitor, stop, and/or delete data processing workflows on one or more data objects stored in one or more (local and remote) storage systems.

According to yet another aspect, coordinating the request may further comprise: by using a first distribution mode of the service coordination layer, distributing the request from a local site of the local sites and remote sites to at least one of the remote sites.

According to yet another aspect, coordinating the request may further comprise: by using a second distribution mode of the service coordination layer, distributing the request along a chain of at least some of the local sites and remote sites.

According to yet another aspect, coordinating the request may further comprise: by using a third distribution mode of the service coordination layer, hierarchically sorting the one or more local sites and remote sites.

According to yet another aspect, the response may be combined from a plurality of responses provided by each of the at least one local sites and remote sites.

Accordingly, a response from a plurality of (local and remote) sites can be manipulated, filtered, merged, and/or combined according to some user's needs.

According to yet another aspect, the service coordination layer may be integrated into each of the local sites and remote sites.

In another general aspect there is provided a computer-program product comprising computer readable instructions, which when loaded and run in a computer system and/or computer network system, cause the computer system and/or the computer network system to perform a method as described.

In yet another general aspect, a service coordination layer for a distributed system for data retrieval, archiving, and replication may comprise one or more modules for coordinating a request between at least one caller and one or more local sites and remote sites and wherein the service coordination layer may be operable to:
receive at least one request from the caller;
send the request to at least some of the local sites and remote sites by using at least one of the modules;
receive a response from the at least some of the local sites and remote sites; and
send the response to the caller.

According to yet another aspect, the service coordination layer is further operable to perform operations according to any one of the described methods.

In yet another aspect, a distributed system for data archiving, retrieval and replication may comprise:
a service coordination layer according to any one of the described layers;
one or more local sites and remote sites connected to the service coordination layer; and
one or more callers (client applications, users) operable to access the one or more local sites and remote sites through the service coordination layer.

The subject matter described in this specification can be implemented as a method or as a system or using computer program products, tangibly embodied in information carriers, such as a CD-ROM, a DVD-ROM, a semiconductor memory, a hard disk, a tape, and a tape cartridge. Such computer program products may cause a data processing apparatus to conduct one or more operations described in this specification.

In addition, the subject matter described in this specification can also be implemented as a system including a processor and a memory coupled to the processor. The memory may encode one or more programs that cause the processor to perform one or more of the method acts described in this specification. Further the subject matter described in this specification can be implemented using various machines.

Details of one or more implementations are set forth in the accompanying exemplary drawings and exemplary description below. Other features will be apparent from the description and drawings, and from the claims.

### Technical Terms

Following technical terms are widely used throughout the description. The terms may refer to but are not limited to the subsequently given explanations.

### Domain:

In computing, a domain may be basically a sphere of knowledge identified by a name. On the Internet, a domain may consist of a set of network addresses. Such a domain may be organized in levels. A top level may identify geographic or purpose commonality. A second level may identify a unique place within the top level domain an may be equivalent to a unique address on the Internet (an IP address). Lower levels of domains may also be used. In the Internet's domain name system (DNS), a domain may be a name with which name server records are associated that describe subdomains or hosts. An domain name (e.g. www.media-archive.de) locates an organization or other entity on the Internet. For example, an Internet address for "media-archive.de" at IP address 82.165.68.159 and a particular host server named "www". More than one domain name may be mapped to the same Internet address (IP address). Hence, a plurality of individuals and/or organizations may have separate identities while sharing the same Internet server (being located by a single IP address).

### Local Sites and Remote Sites:

Local sites (e.g. Web sites) may share one or more resources located at at least one server having the same IP address. Remote sites with respect to a local site are located at a different server than the local site in a network such as the Internet and having one or more IP addresses different from the IP address of the local site.

### Service Coordination Layer:

A service coordination layer or multi-site layer may define a (software) layer comprising one or more coordination or service modules for a distributed system comprising local sites and remote sites. The layer may unite the distributed installation of the local sites and remote sites in the distributed system at a level which may be located above or on top of one or more services of the local and remote sites such that a (client) application accessing to the distributed system may connect to the service coordination layer rather than to a single service located on one of the local or remote sites. At least one of the modules provided in the coordination layer may be implemented as part of each of the local and remote sites. The modules of the coordination layer may support standardized or consistent services for access to the local and remote sites of the distributed system. The modules of the coordination layer may support login services, retrieval services (e.g. comprising read-only operations), data manipulation services (e.g. comprising read-and-write operations), spreading services to spread a request call across multiple sites and collection services to collect or combing responses form multiple sites, replication and federation services, and workflow support.

### Brief Description of the Drawings

Figure 1 shows a block diagram of an exemplary distributed system.
Figure 2 shows a block diagram of an exemplary service coordination layer.
Figure 3 shows a block diagram of an exemplary implementation of a service coordination layer for a distributed system.
Figure 4 shows a block diagram of an exemplary implementation of a first distribution mode.
Figure 5 shows a block diagram of an exemplary implementation of a second distribution mode.
Figure 6 shows a block diagram of an exemplary implementation of a third distribution mode.
Figure 7 shows a block diagram of an exemplary user request through a distributed system.
Figure 8 shows a block diagram of an exemplary implementation of a log-in to a distributed system.
Figure 9 shows a block diagram of an exemplary implementation of a search on a distributed system.
Figure 10 shows a block diagram of an exemplary implementation of a request for detailed views from using a distributed system.
Figure 11 shows a block diagram of an exemplary implementation of a computer and/or computer network system.

### Detailed Description

In the following, a detailed description of examples will be given with reference to the drawings. It should be understood that various modifications to the examples may be made. In particular, elements of one example may be combined and used in other examples to form new examples.

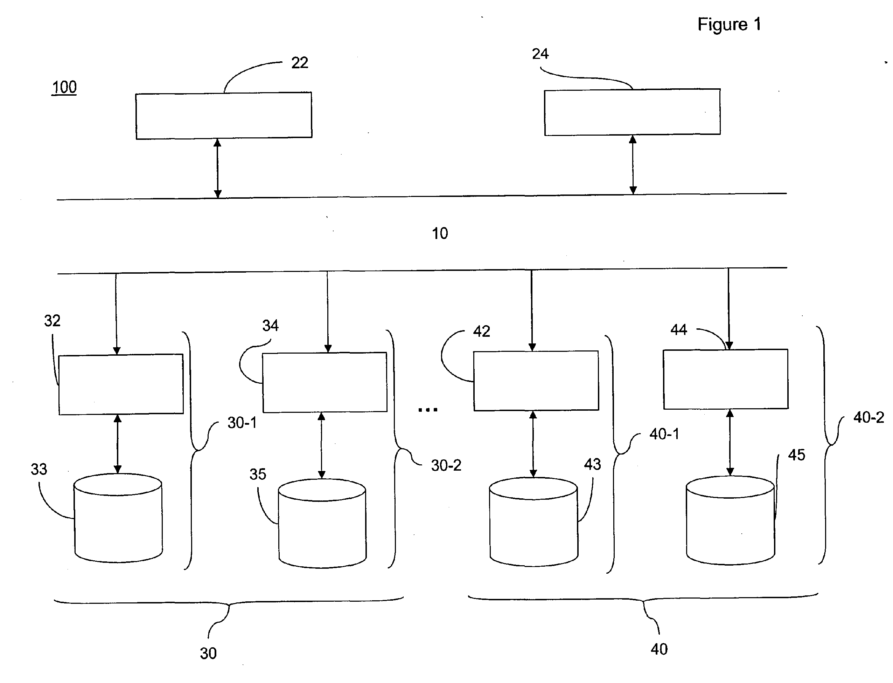

**Fig. 1** shows an exemplary distributed architecture or system 100 comprise one or more local sites 30-1, 30-2 and remote sites 40-2, 40-3. A (local or remote) site 30-1, 40-1 may comprise at least one service 32, 42 connected to at least one storage system 33, 43 such as a database or a file system storing (complex) data objects such as media data, media content or media assets. Local sites are located at a local server installation 30 and remote sites are located at at least one remote server installation 40. The system 100 supports local and remote access to data, information, and/or content stored in different (possibly heterogeneous) storage systems such as databases and file systems and distributed across different locations or sites such as different (Web) services in a wide area network (WAN).

The distributed system of **Fig. 1** comprises an additional software layer 10, a multi-site layer or service coordination layer, which unites or standardizes access to a distributed system of one or more local sites 30-1, 30-2 and one or more remote sites 40-1, 40-2 (e.g. of one or more self-contained or independent media archive systems) at a level that is above one or more (Web) services or backend services 32, 34, 42, 44 of the sites 30-1, 30-2, 40-1, 40-2. The services 32, 34, 42, 44 provide access to different or heterogeneous storage systems 33, 35, 43, 45 such as databases or file systems. An application 22, 24 such as a user, a client application or another service (possibly located on another server) which wants to access or retrieve data (content or information) from one or more of the services 32, 34, 42, 44 does not directly connect to one or more of the services 32, 34, 42, 44 but instead to the service coordination layer 10. The services 32, 34, 42, 44 and their related storage systems 33, 35, 43, 45 can be located either at a local server installation 30 or at one or more remote server installations 40.

A local site 30-1, 30-2 may comprise one or more services 32, 34 and related storage systems 33, 35 which are located on a server 30 which is local. A remote site 40-1, 40-2 may comprise one or more services 42, 44 and related storage systems 43, 45 which are located on one or more servers 40 which are remote w.r.t. the local server 30. In other words, the remote sites 40-1, 40-2 may reside in one or more domains different from a domain of the local sites 30-1, 30-2.

In one implementation, the service coordination layer 10 comprises one or more (coordination) modules or services which distribute and manage a request (call) from one or more callers or applications 22, 24 between the applications 22, 24 and the one or more local and/or remote sites 30-1, 30-2, 40-1, 40-2. The modules are operable to perform one or more data manipulation operations on the backend services 32, 34, 42, 44. For example, the modules may perform queries and searches on one or more of the (local or remote) services 32, 34, 42, 44. In another example, the modules of the service coordination layer 10 may create, update, modify, write, and/or delete data stored in one or more of the storage systems 33, 35, 43, 45 of the (local or remote) services 32, 34, 42, 44. In yet a further example, the modules of the service coordination layer 10 may start, monitor, stop, or delete data processing workflows which are performed on the (local or remote) services 32, 34, 42, 44. In other words, different operations which may usually be performed by directly accessing the services 32, 34, 42, 44 can be now performed through accessing the service coordinator 10.

In one implementation, depending on the caller 22, 24 and/or a content or type of a request or call against the distributed system 100, the service coordination layer 10 distributes the request to one or more of the services 32, 34, 42, 44 which are located at a local server 30 or at one or more remote servers 40. The content of a request may be based on one or more data manipulation operations on data objects which may be exchanged between the caller 22, 24 and the services 32, 34, 42, 44. The data objects may be stored on one or more of the storage systems 33, 35, 43, 45 of the services 32, 34, 42, 44. The type of a request may be based on whether the request is a read-only request (e.g. a search, query, or access request), a read-and-write request (e.g. a create, update, modify, write, or delete request on one or more data objects stored in the storage systems 33, 35, 43, 45), or a complex request such as a workflow to be executed by one or more of the services 32, 34, 42, 44 based on data stored in the corresponding storage systems 33, 35, 43, 45 (e.g. a request to start, monitor, stop or delete data processing workflows).

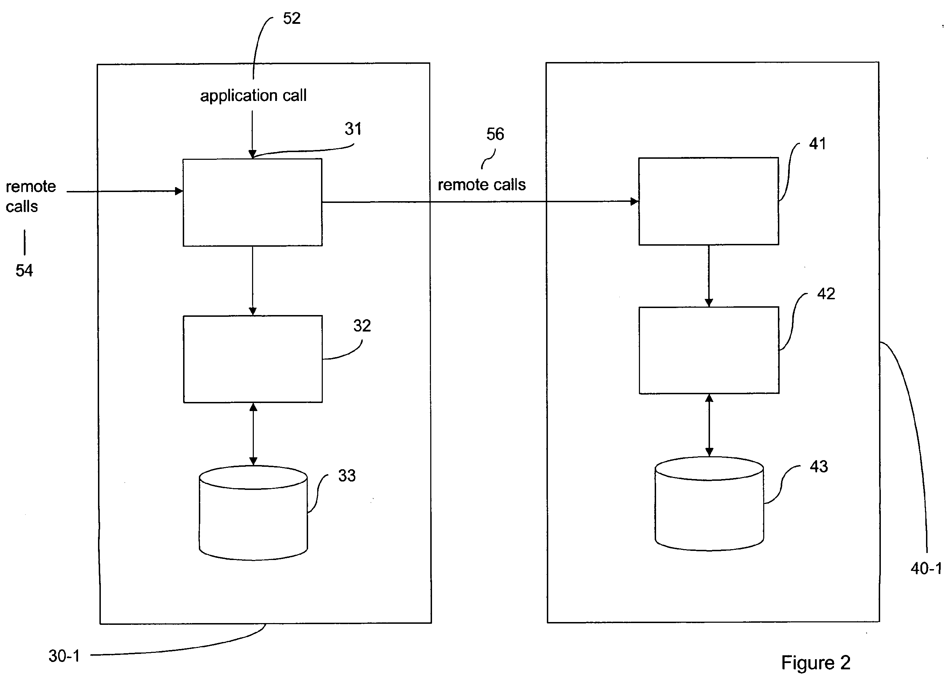

As shown with reference to **Fig. 2**, at least one of the coordination modules of the (service) coordination layer 10 can be integrated into each of the services 32, 34, 42, 44. In other word, the service coordination layer 10 or at least one module of the coordination layer 10 can be part of a service 32, 34, 42, 44. Hence, for-each local or remote site 30-1, 40-1, at least one module of a service coordination layer 10 such as a spreader or collector module 31, 41 is provided. In one implementation, the collector 31, 41 sits on top of the service 32, 42 such as a data manager (Web) service.

In one implementation, a caller 22, 24 connects to the collector or spreader 31 either by a (local) application call 52 or by a remote call 54. The spreader 31 comprises a list of (local and/or remote) services 42 it should connect to. In one example, the spreader 31 receives a call for a create or update request 52, 54 from the (local or remote) caller 22, 24. The spreader 31 directs the request 52, 54 to a local service 32. Subsequently, the spreader 31 directs the request 56 using the same call to a spreader or collector 41 of a remote service 42. Since the request 52, 54 comprises a create or update operation to be performed on at least one data object stored in storage systems 33, 43 of both the local service 32 and the remote service 42, at least one data object is created or updated both in the local storage system 33 and in the remote storage system 43. In another example, the request 52, 54 is a search request. Accordingly, the search request 52, 54 is spread across the local site 30-1 and one or more remote sites 40-1 by the spreaders or collectors 31, 41 of each of the sites 30-1, 40-1. The collector 31 then combines all results coming from the local service 32 as well from the one or more remote services 42 and sends a combined or overall result in a response to the caller 22, 24.

Various design aspects are considered when providing the functionality of the service coordination layer 10. Since the service coordination layer 10 enables connection not only to a local server 30 but also to remote servers 40, the service coordination layer 10 is designed for so called wide area networks (WANs) such as the Internet. For this purpose, the service coordination layer 10 enables connection from local services 32 to remote services 42 by a highly reliable (transport or communication) protocol. The protocol ensures a secure and reliable transmission with transaction and rollback mechanisms. In one implementation, a communication protocol such as http, https or WS-RM (Web Services Reliable Messaging)/WS-WRM (WS Wireless Reliable Messaging) from OASIS is used. Furthermore, a request call is signed with a time stamp. In one example, the time stamp can be used to order subsequent requests which refer to the same data object.

In another example, the coordination layer employ object ownership which may allow or prefer certain changes to the data objects only for specific user groups or for users that are connected to a specific (local or remote) site. This mechanism can be used to resolve access conflicts.

In case a request call comprises a read-and-write request, the service coordination layer 10 supports locking and exclusion mechanisms. In one example, semaphores are used to handle locking and exclusion mechanisms, e.g. a writing operation has to receive or take a token or semaphore for a data object before writing on the object. In another example, a data object is locked until a write operation can be performed on the object.

In one implementation, the service coordination layer 10 supports conflict resolution. In one example, a conflict which is resolved by the service coordination layer 10 refers to an aspect that a data object has been deleted from a (local or remote) storage system and a delayed update request is later received for this data object from a remote site 40-1, 40-2 which is too late due to network delays.

In one implementation, the service coordination layer 10 supports a reliable transport protocol, locking and exclusion mechanisms and conflict resolution. In this way, the service coordination layer 10 may provide a secure connection to remote sites 40-1, 40-2. Furthermore, the service coordination layer 10 may handle or manage operations or requests across local sites 30-1, 30-2 and remote sites 40-1, 40-2 in a way that failed requests or operations due to defective and/or temporally unavailable connections are recovered. Beyond, the service coordination layer 10 prevents from deadlocks and simultaneous writing to the same data object.

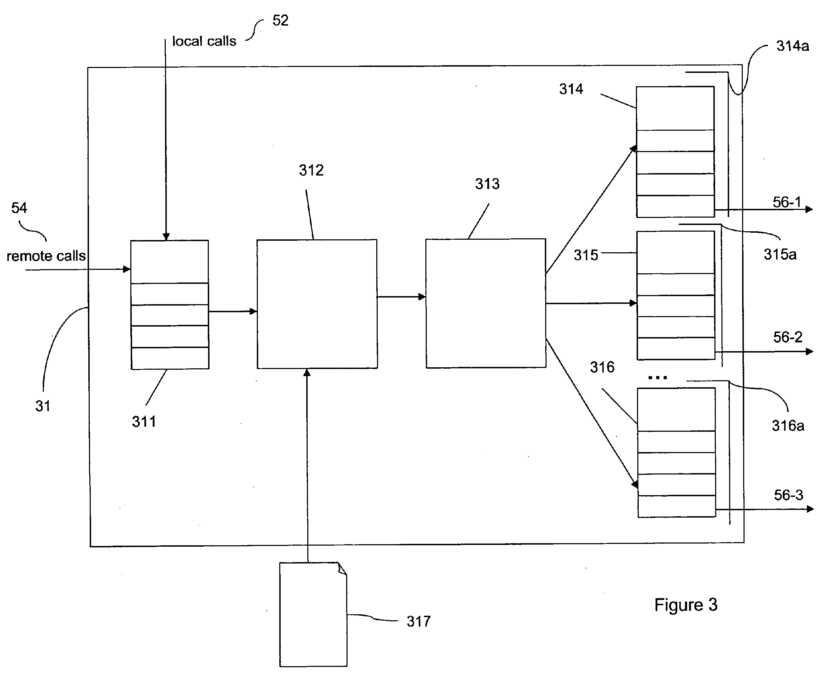

**Fig. 3** shows an exemplary implementation of a spreader module 31 of the service coordination layer 10 using a queuing algorithm. An incoming (request) call 52, 54 (e.g. a local call 52 from a local application 22, 24 or a remote call 54 from another server) is fed into an input queue 311. An analyzer 312 fetches the request 52, 54 from the input queue 311. The analyzer 312 analyzes the content of the request 52, 54 in view of configuration data 317 and decides whether the request 52, 54 comprises data which is required for dispatching. Then a dispatcher 313 receives the request 52, 54 sorts or dispatches the request 52, 54 to at least one output queue 314 of a plurality of output queues 314, 315, 316, each associated to one of a plurality of remote sites. The request 52, 54 is sorted or dispatched into one or more of the output queues 314, 315, 316 depending on a result of the analyzes performed by the analyzer 312. The request 52, 54 may be dispatched to particular output queues 314, 315, 316 depending on the call 22, 24. In another implementation, the request 52, 54 is sorted to one or more of the output queues 314, 315, 316 depending on request itself which may comprise one or more server addresses. In yet another implementation, the request 52, 54 is sorted to one ore more of the output queues 314, 315, 316 based upon the kind or type of the request 52, 54 (e.g. a read-only operation or a read-and-write operation). In yet another implementation, the request 52, 54 is sorted to one or more of the output queues 314, 315, 316 based upon one or more data objects or content to be exchanged between the caller 22, 24 and local and remote sites 30-1, 40-1.

Each of the output queues 314, 315, 316 is processed by a thread 314a, 315a, 316a. Each of the threads 314a, 315a, 316a organizes or manages a connection to one of one or more remote sites on a session basis. In other words, a thread 314a, 315a, 316a tries to keep a (communication) session with its associated remote site open as long as requests are located in the corresponding output queue 314, 315, 316. The threads 314a, 315a, 316a of the corresponding output queues 314, 315, 316 send a corresponding request 56-1, 56-2, 56-3 to a remote site which is assigned to at least one of the output queues 314, 315, 316 by using a special (communication or transport) protocol (e.g. WS-RM or WS-WRM).

The service coordination layer 10 queues calls to remote sites since the network may be slow or unavailable or not reliable enough.

In one implementation, the service coordination layer 10 supports one or more coordination modules for incoming calls or requests such as data manipulation operations, e.g. read-only operations comprising search and query operations across local and remote services and read-and-write operations comprising different writing operations on local and remote services. In one aspect, this differentiation is made for different coordination modules on different levels of the coordination layer 10. In one aspect, the coordination modules, which form the service coordination layer 10 may provide different levels of increasing tightness and coverage of interoperability. The service coordination layer 10 may provide interoperability on a data management level, essence management level and the essence level. The service coordination layer 10 may comprise on or more of a data management level, an essence management level, an essence level, workflow management level and workflow level. These levels describe different levels of rather tight or loose coupling of a plurality of local an remote sites 30-1, 30-2, 40-1, 40-2 accessible via the service coordination layer 10.

### Data Management Level

One (first) level of at least one module of the coordination layer 10 may be a level for data management. At this level local sites 30-1, 30-2 and remote sites 40-1, 40-2 replicate and share data and content of their corresponding metadata databases. In one example, the data management level may only support read-only operations. In this example, locking mechanisms and conflict resolution mechanisms are not supported.

### Essence Management Level

On further level of at least one module of the coordination layer 10 may be a level for essence management. In one example, essence comprises media files stored in local and remote sites. Such a module is support by the coordination layer if essence metadata is distributed across multiple sites and fast access to this data is required.

### Essence Level

An additional level of at least one module of the coordination layer 10 may be a level for essence files (e.g. media files) themselves. This level may be support in case essence files are shared and distributed across one ore more local and remote sites. In one example, this level is implemented by an FTP server which pushes essence files from a (local) site comprising the origin data files to FTP clients on one or more remote sites. Folders may be implemented at the remote sites which wait for exported essence files to import them. Workflows may be used to manage this tasks.

Additional level provided by the service coordination layer 10 may be a workflow management level and a workflow level.

### Workflow Management Level

An additional level of interoperability provided by at least one module of the Service coordination layer 10 may be a level of workflow management. This level may support workflows that have to be started on local as well as on one ore more remote site, In one example one local workflow may export an essence to one or more remote sites and one workflow on one or more remote sites may receive these essence and Import it into the remote sites.

### Workflow Level

An additional level of interoperability provided by at least one module of the service coordination layer 10 may be a level of workflow (i.e. scripts that invoke, start, monitor and stop services and exchange data between these services). This level may support the exchange of data and commands between workflows that run on the local site as well as on one or more remote sites. In one example two identical workflows are installed on one local and one remote site for failover issues. The workflow runs on the local site where the workflow is suspended at the remote (failover) site, but the workflow data (e.g. program counter, variables, status flags etc. are replicated from the local to the failover site in order to keep both systems up to date. in the case the local system fails the workflow is started at the same stage of processing and with the same processing data (variables, status flags etc.) as the original workflow on the failed system.

In one implementation, the service coordination layer 10 may further comprise a module for user management managing aspects such as user access to the system 100 comprising login services.

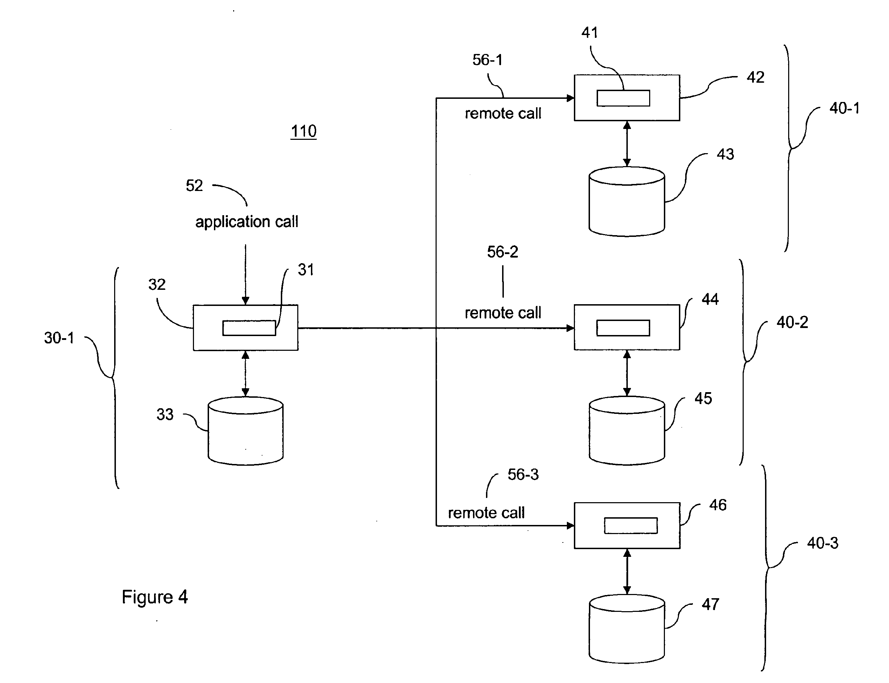

In one implementation, at least one coordination module 31, 41 (e.g. a spreader or collector) of a coordination layer 10 is integrated into each of the local services 32 and remote services 42, 44, 46 can organize the distribution of a request call 52 to one or more local service sites 30-1 and one or more remote service sites 40-1, 40-2, 40-3 using different (distribution) modes which are illustrated with reference to **Figs. 4 to 6****.**

With reference to **Fig. 4** a first distribution mode (broadcast mode) 110 is shown, wherein a principle (local) site 30-1 which comprises at least one coordination module 31 of the coordination layer 10 distributes or spreads a call 52 to one or more remote sites 40-1, 40-2, 40-3. For example, a call 52 received at the local site 30-1 comprises an update operation to be performed on at least one data object comprised in a storage system 33 a the local site 30-1 and two of the storage systems 43, 47 at the corresponding remote sites 40-1, 40-3. The coordination module (spreader or collector) 31 at the local site 30-1 distributes the call 52 to the remote sites 40-1, 40-3 upon analysis of the update operation comprised in the call 52. After the update operation has been performed on the storage system 33 at the local site 30-1 and the storage systems 43, 47 of the corresponding remote sites 40-1, 40-3 the sites 30, 40-1, 40-3 are synchronized.

The first distribution mode 110 may create much traffic among the local and remote sites 30-1, 40-1, 40-2, 40-3, e.g. in case all local and remote sites 30-1, 40-1, 40-2, 40-3 are involved in a read-and-write operation such as an update operation on one or more (complex) data objects comprised in each of the corresponding (local and remote) storage systems 33, 43, 45, 47. In one application, the first distribution mode 110 is applied by the service coordination layer 10 if a limited number of sites (e.g. 5 to 8 sites at maximum) are organized or managed through the coordination layer 10 in a distributed system 100.

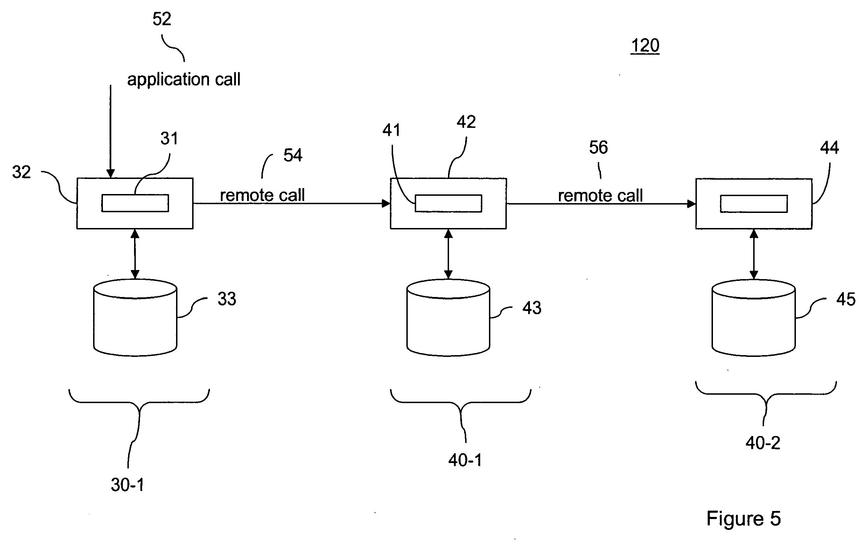

With reference to **Fig. 5** a second distribution mode (chain mode) 120 is shown, wherein a call 52 is distributed to one or more local sites 30-1 and remote sites 40-1, 40-2 along a chain. For example, a local site 30-1 receives a request call 52 from an application at its coordination module (spreader or collector) 31 which distributes the request to a service 32. Additionally, the spreader 31 passes the request 52 to a remote site 40-1 in a remote call 54. On the one hand side, a spreader or collector 41 at this remote site 40-1 distributes the request to a service 42 and on the other hand side, the spreader or collector 41 distributes the request 52 to a further remote site 40-2 in a remote call 56.

If the service coordination layer 10 supports the second distribution mode 120, a traffic load in a network is reduced, but a time of delays is increased. The number of calls send across the network among local sites 30-1 and remote sites 40-1, 40-2, 40-3 remains the same as in the first distribution mode 110, but they are stretched across the time. In one implementation, the service coordination layer 10 uses the second distribution mode 120 if network resources are limited or at least one last site 40-2 in the chain operates only as a receiver but not as a sender. In other words, the last site 40-2 is informed about newly created data objects but does not create the new data objects.

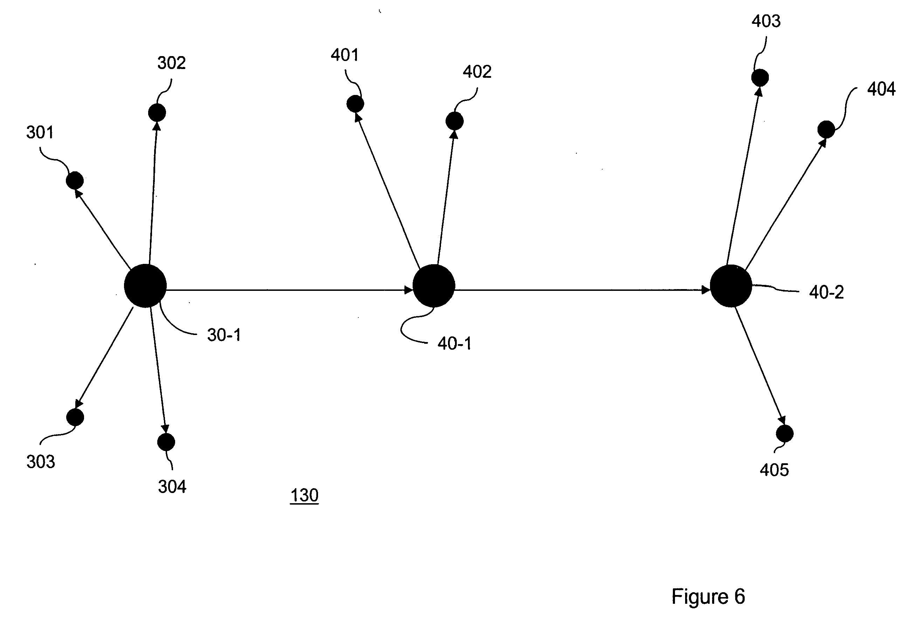

With reference to **Fig. 6**, a third distribution mode (hierarchical mode) 130 is shown. Local sites 30-1, 301, 302, 303, 304 and remote sites 40-1, 40-2, 401, 402, 403, 404, 405 are (hierarchically) order according to their importance (with respect to possible requests) in the distributed system on each (local or remote) server. For example, a main site 30-1, 40-1, 40-2 of high importance (e.g. due to frequent requests) and one or more less important sites 301, 302, 303, 304; 401, 402; 403, 404, 405 (e.g. which are less frequently accessed) are associated with each of the (local or remote) main sites 30, 40-1, 40-2, respectively on one or more local or remote servers. In one implementation, the main sites 30, 40-1, 40-2 communicate via a first distribution mode 110 or a second distribution mode 120 with each other and the corresponding sites 301, 302, 303, 304; 401, 402; 403, 404, 405 receive information and/or data (directly) from their main site 30, 40-1, 40-2 they are associated with.

In one implementation of the (service) coordination layer 10 of a distributed system 100, local sites 30-1 and remotes sites 40-1, 40-2, 40-3 of the distributed system communicate with each other using a combination of a first distribution mode 110, a second distribution mode 120, and/or a third distribution mode 130, e.g. in accordance with a particular configuration of a distributed system 100 and its coordination layer 10 and/or particular user needs.

In one implementation, a service coordination layer 10 can be used for installation of at least one site (e.g. a media archive) comprising a service and a storage system in a distributed system 100. The site can be either local or remote. In a first phase, local sites 30-1, 30-2 and remote sites 40-1, 40-2 can be installed as stand-alone sites 30-1, 30-2, 40-1, 40-2. A service coordination layer 10 may be installed for the (local and remote) sites 30-1, 30-2, 40-1, 40-2 or not. In a first implementation, the service coordination layer 10 may be installed for local access only. Subsequently, the service coordination layer 10 may be enlarged to support of remote access. As described with reference to **Figs. 1 to 6**, the service coordination layer 10 may comprise one or more coordination modules wherein at least one of the modules is incorporated into each of the (local and remote) sites 30-1, 30-2, 40-1, 40-2. For integration of multiple local and remote sites 30-1, 30-2, 40-1, 40-2 the service coordination layer 10 may initially support a coordination module comprising read-only operations such as search operations. Subsequently, the service coordination layer 10 may support further coordination modules to replicate or mirror metadata across each of the (local and remote) sites 30-1, 30-2, 40-1, 40-2. An integration of a plurality of distributed local and remote sites 30-1, 30-2, 40-1, 40-2 through a (service) coordination layer 10 may start with two sites and incorporate further sites subsequently.

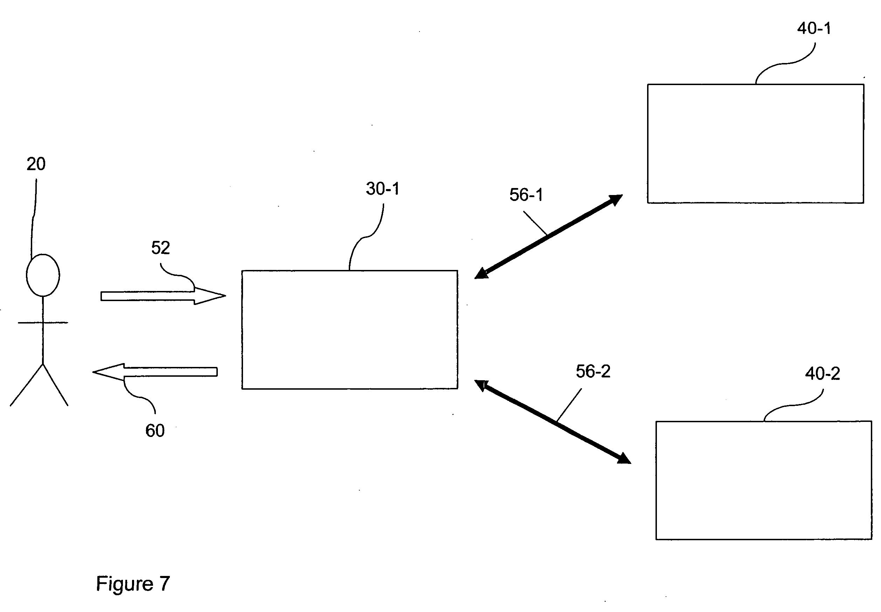

With reference to **Figs. 7 to 10** exemplary use of a service coordination layer 10 for access to one or more local sites 30-1 and remote sites 40-1, 40-2 in a distributed system 100 e.g. for media asset management, wherein the (local and remote) sites 30-1, 40-1, 40-2 are media archive systems, is shown. A media archive system may store complex data objects such as media data, media content and/or media assets as well as processing data such as workflow templates, workflow data and order information and user data such as access data, usage data and configuration data.

**Fig. 7** shows an exemplary distributed system comprising one local site 30-1 and two remote sites 40-1 and 40-2. The local site 30-1 is located on a local server 30 of an operator and the two remote sites 40-1 and 40-2 are located on the same or two different remote servers 40 (e.g. located at different geographical locations or places). In one example, all sites 30-1, 40-1, 40-2 import, receive or incorporate data from their local systems and all sites are operable to search data, content and/or information across all sites 30-1, 40-1, 40-2 through a (service) coordination layer 10. The coordination layer 10 for such a distributed system may support search across all (local and remote) sites 30-1, 40-1, 40-2 and provides detailed information for a plurality of data objects stored on the local sites 30-1 and/or remote sites 40-1, 40-2.

In one implementation, at least one local site 30-1 and on or more remote site 40-1, 40-2 of the distributed system are connected via the http protocol. The sites 30-1, 40-1, 40-2 communicate either through a public network such as the Internet or through a virtual private network (VPN) (e.g. for security reasons).

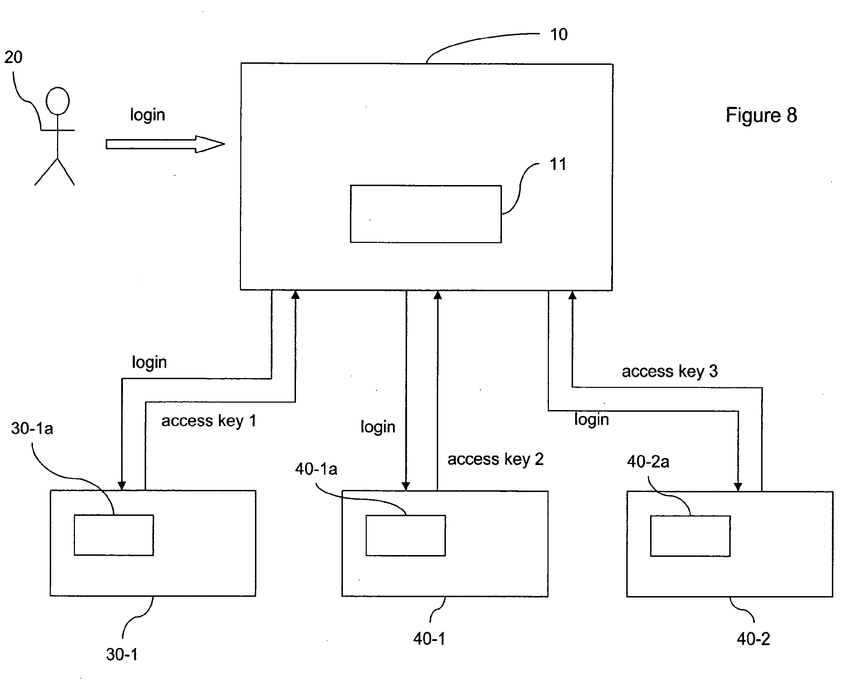

A user 20 starts a search across multiple sites 30-1, 40-1, 40-2. As shown in **Fig. 8****,** the user 20 logs in to the distributed system through a (service) coordination layer 10. The coordination layer 10 comprises a module 11 which supports a login service. In one implementation, a user management module 30-1a, 40-1a, 40-2a of the coordination layer 10 is implemented in each site 30-1, 40-1, 40-2. After the user 20 has been logged in to the service coordination layer 10 using an access key, the service coordination layer 10 contacts each of the remote sites 40-1, 40-2 and requests access keys from all the remote sites 40-1, 40-2 and stores them internally. If an access key has become invalid, because a session, which the access key has been generated for, has timed out, the service coordination layer 10 may request a new access key automatically or at the time of the next access to the remote system. To connect to the local sites 30 and remote sites 40-1, 40-2, the login service 11 first connects to the respective local and remote configuration services to resolve the address or name (e.g. the URL or the IP address of at least one server, the remote sites 40-1, 40-2 are located at). In other words, the service coordination layer 10 provides a name of a service (or component) of the remote site 40-1, 40-2. After address resolution, the service coordination layer 10 receives the address of the service in the remote site 40-1, 40-2. The coordination layer 10 may also store URLs of most or most recently requested remote services internally in order to save time.

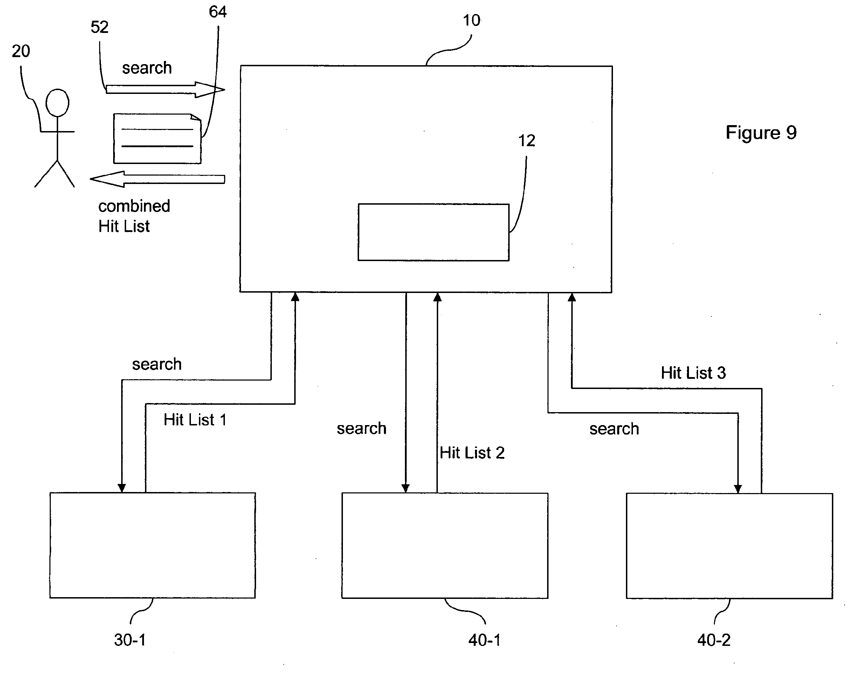

**Fig. 9** shows a search request 52 formulated against the system via the coordination layer 10 to access one or more local sites 30-1 and remote sites 40-1, 40-2. The service coordination layer 10 comprises a coordination module 12 for retrieval (e.g. a (Web) retrieval service). The coordination service 12 spreads the search request 52 to the local sites 30-1 and remote sites 40-1, 40-2 as e.g. shown with reference to **Figs. 2 to 6****.**

In one implementation, the remote sites 40-1, 40-2 which receive the request 52 are configured for the system. Each of the local and remote sites perform one or more operations on their underlying data stored in their corresponding storage systems according to the request 52. After each of the sites 30-1, 40-1, 40-2 have completed their operations regarding the search request 52, they send back corresponding result data (e.g. in a list) to a Web service which has issued the query. The coordination service 12 collects the results or lists from each of the sites 30, 40-1, 40-2, combines, merges, filters, and/or formats them into a single combined result list 64 and displays the combined result (list) 64 to the user 20.

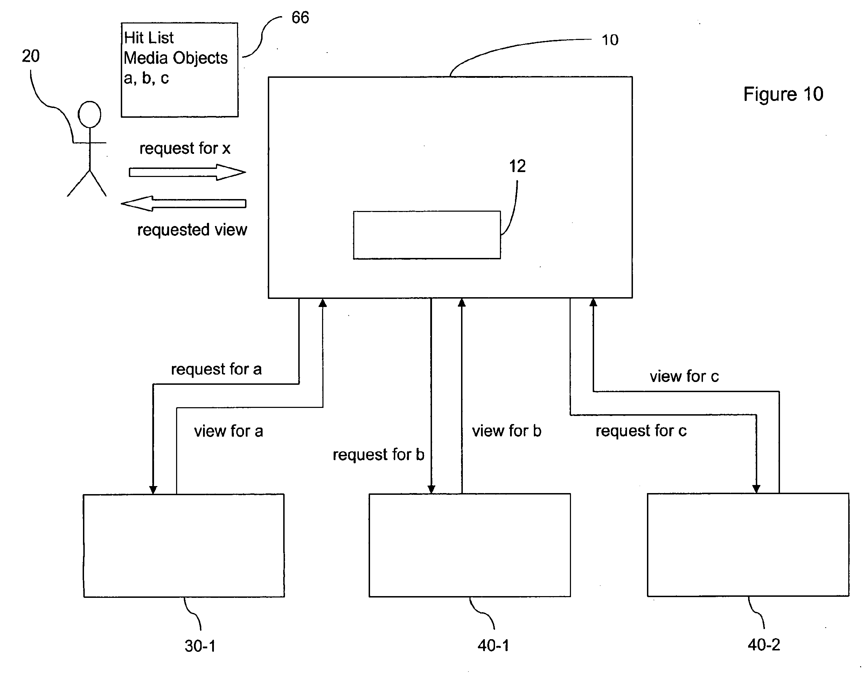

As shown with reference to **Fig. 10**, a user 20 may select from the combined result list 64 one or more data objects x for which he/she wants to retrieve further details. The coordination service 12 of the service coordination layer 10 recognizes or detects in accordance with the selected data objects x, from which (local and/or remote) sites 30-1, 40-1, 40-2 the data objects are retrieved and connects to the respective sites 30-1, 40-1, 40-2. Depending on the retrieved data objects, the coordination 12 either directly connects to the remote services to retrieve the views corresponding to the data objects or connects to the remote services to retrieve the data needed to compile the views corresponding to the data objects.

In one implementation, one or more aspects of a (service) coordination layer 10 for coordinating local and remote sites 30-1, 30-2, 40-1, 40-2 in a distributed 100 may be configurable. In one example, local sites 30-1, 30-2 and remote sites 40-1, 40-2 which should be accessible within the system 100 can be configured such that they can be registered to the coordination layer 10. Furthermore, an URL (Uniform Resource Locator) or URI (Uniform Resource Identifier) for each of the registered sites 30-1, 30-2, 30-3, 30-4 can be configured (e.g. entered to the coordination layer 10). For example, instead of configuring all remote sites 40-1, 40-2, a coordination module of the coordination layer 10 may use a remote naming service at each of the remote sites 40-1, 40-2 to receive or get the URLs or URIs from the remote sites 40-1,40-2.

In one implementation, access to remote sites 40-1, 40-2 can be configured, e.g. by indicating only some of the remote sites 40-1, 40-2 to be remotely accessible. Furthermore, it may be configurable depending on a request call (e.g. whether it comprises a read-only operation or a read-and-write operation), whether the call is spread across the remote sites 40-1, 40-2 or merely across local sites 30-1, 30-2. In one example, remote access is configured depending on one or more data objects addressed in a request call. Furthermore, remote access may be configured depending on the values of certain attributes in metadata of processing data. In one implementation access to local as well as to remote sites may be granted or denied for certain user groups.

In one implementation, a user may define for each remote site 40-1, 40-2 a hit list which should exist in the corresponding remote site 40-1, 40-2. Furthermore, the user may configure a waiting time (e.g. a time-out) for a request for each remote site 40-1, 40-2 e.g. in milliseconds. A uniform password may be defined for all remote sites 40-1, 40-2.

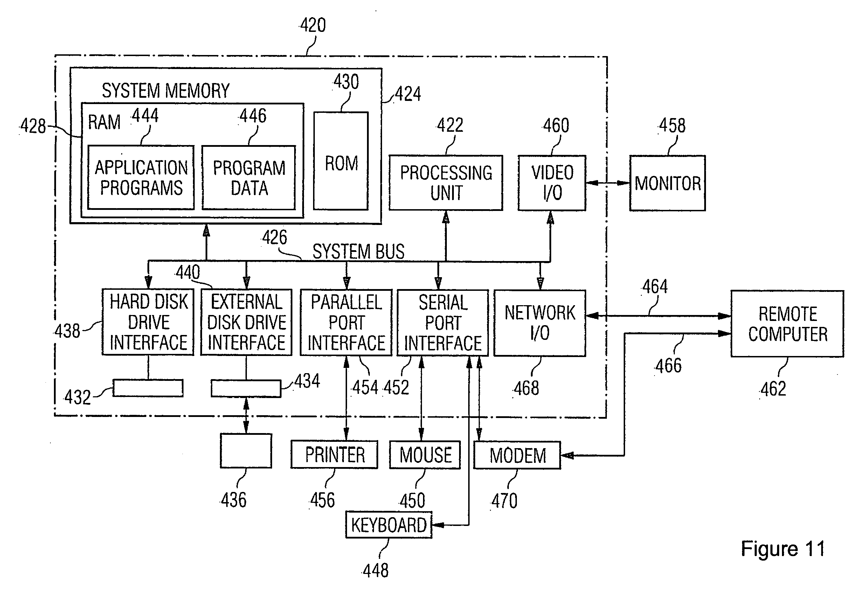

With reference to **Fig. 11****,** an exemplary system for implementing the invention includes a general purpose computing device in the form of a conventional computing environment 420 (e.g. personal computer), including a processing unit 422, a system memory 424, and a system bus 426, that couples various system components including the system memory 424 to the processing unit 422. The processing unit 422 may perform arithmetic, logic and/or control operations by accessing system memory 424. The system memory 424 may store information and/or instructions for use in combination with processing unit 422. The system memory 424 may include volatile and non-volatile memory, such as random access memory (RAM) 428 and read only memory (ROM) 430. A basic input/output system (BIOS) containing the basic routines that helps to transfer information between elements within the personal computer 420, such as during start-up, may be stored in ROM 430. The system bus 426 may be any of several types of bus structures including a memory bus or memory controller, a peripheral bus, and a local bus using any of a variety of bus architectures.

The personal computer 420 may further include a hard disk drive 432 for reading from and writing to a hard disk (not shown), and an external disk drive 434 for reading from or writing to a removable disk 436. The removable disk may be a magnetic disk for a magnetic disk drive or an optical disk such as a CD ROM for an optical disk drive. The hard disk drive 434 and external disk drive 434 are connected to the system bus 426 by a hard disk drive interface 438 and an external disk drive interface 440, respectively. The drives and their associated computer-readable media provide nonvolatile storage of computer readable instructions, data structures, program modules and other data for the personal computer 420. The data structures may include relevant data of the implementation of the data archiving and retrieving method, as described in more details below. The relevant data may be organized in a database, for example a relational or object database.

Although the exemplary environment described herein employs a hard disk (not shown) and an external disk, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk, ROM 430 or RAM 428, including an operating system (not shown), one or more application programs 444, other program modules (not shown), and program data 446. The application programs may include at least a part of the functionality as detailed in **Figs. 1 to 10****.**

A user may enter commands and information, as discussed below, into the personal computer 420 through input devices such as keyboard 448 and mouse 450. Other input devices (not shown) may include a microphone (or other sensors), joystick, game pad, scanner, or the like. These and other input devices may be connected to the processing unit 422 through a serial port interface 452 that is coupled to the system bus 426, or may be collected by other interfaces, such as a parallel port interface 454, game port or a universal serial bus (USB). Further, information may be printed using printer 456. The printer 456, and other parallel input/output devices may be connected to the processing unit 422 through parallel port interface 454. A monitor 458 or other type of display device is also connected to the system bus 426 via an interface, such as a video input/output 460. In addition to the monitor, computing environment 420 may include other peripheral output devices (not shown), such as speakers or other audible output.

The computing environment 420 may communicate with other electronic devices such as a computer, telephone (wired or wireless), personal digital assistant, television, or the like. To communicate, the computer environment 420 may operate in a networked environment using connections to one or more electronic devices. **Fig. 11** depicts the computer environment networked with remote computer 462. The remote computer 462 may be another computing environment such as a server; a router, a network PC, a peer device or other common network node, and may include many or all of the elements described above relative to the computing environment 420. The logical connections depicted in **Fig. 11** include a local area network (LAN) 464 and a wide area network (WAN) 466. Such networking environments are commonplace in offices, enterprise-wide computer networks, intranets and the Internet.

When used in a LAN networking environment, the computing environment 420 may be connected to the LAN 464 through a network I/O 468. When used in a WAN networking environment, the computing environment 420 may include a modem 470 or other means for establishing communications over the WAN 466. The modem 470, which may be internal or external to computing environment 420, is connected to the system bus 426 via the serial port interface 452. In a networked environment, program modules depicted relative to the computing environment 420, or portions thereof, may be stored in a remote memory storage device resident on or accessible to remote computer 462. Furthermore other data relevant to the application of the insurance claim management evaluation method (described in more detail further below) may be resident on or accessible via the remote computer 462. The data may be stored for example in an object or a relation database. It will be appreciated that the network connections shown are exemplary and other means of establishing a communications link between the electronic devices may be used.

The above-described computing system is only one example of the type of computing system that may be used to implement the method for data retrieval, archiving, and replication

### List of Reference Numerals

10 service coordination layer
11 log-in service
12 retrieval service
20 user
22, 24 caller, application
30 local server
40 remote server
30-1, 301, 302, 303, 304 local site
40-1, 40-2, 40-3, 401, 402, 403, 404, 405 remote site
31, 41, 30-1 a, 40-1 a, 40-1 b coordination module
32, 42, 44, 46 service
33, 43, 45, 47 storage system
52 local call
54, 56, 56-1, 56-2, 56-3 remote call
311 input queue
312 analyzer
313 dispatcher
314, 315, 316 output queue
314a, 315a, 316a thread
317 configuration file
60 result
64 result list
66 selected or detailed result list
100 distributed system
110 first distribution mode
120 second distribution mode
130 third distribution mode
420 conventional computing environment
422 processing unit
424 system memory
426 system bus
428 random access memory (RAM)
430 read only memory (ROM)
432 hard disk drive
434 external disk drive
436 removable disk
438 hard disk drive interface
440 external disk drive interface
444 one or more application programs
446 program data
448 keyboard
450 mouse
452 serial port interface
454 parallel port interface
456 printer
458 monitor
460 video input/output
462 remote computer
464 local area network (LAN)
466 wide area network (WAN)
468 network I/O
470 modem

## Claims

1. Computer-implemented method for data retrieval, archiving, and replication in a distributed system (100), the method comprising:
receiving at least one request (52, 54) from at least one caller (22, 24) at a service coordination layer (10), wherein the service coordination layer comprises one or more modules (31, 41; 11, 30-1a, 40-1a, 40-2a; 12) for coordinating the request (52, 54) between the caller (22, 24) and one or more local sites (30-1, 30-2) and remote sites (40-1, 40-2);
by using at least one of the modules (31, 41), sending the request (52, 54) to at least some of the local sites (30-1, 30-2) and remote sites (40-1, 40-2);
receiving a response (60) from the at least some of the local sites (30-1, 30-2) and remote sites (40-1, 40-2); and
sending the response (60) to the caller.

2. Method according to claim 1, wherein sending the request (52, 54) to at least some of the local sites (30-1, 30-2) and remote sites (40-1, 40-2) is determined by the service coordination layer (10) based upon:
the request (52, 54);
the caller (22, 24);
at least one data manipulation operation comprised in the request (52, 54); and/or
at least one data object exchanged between the caller (22, 24) and the at least some of the local sites (30-1, 30-2) and remote sites (40-1, 40-2).

3. Method according to claim 1 or 2, wherein coordinating the request (52, 54) comprises:
performing at least one data manipulation operation on the local sites (30-1, 30-2) and remote sites (40-1, 40-2).

4. Method according to claim 3, wherein performing at least one data manipulation operation comprises at least one of:
performing at least one read-only operation across the local sites (30-1, 30-2) and remote sites (40-1, 40-2);
performing at least one read-and-write operation on the local sites (30-1, 30-2) and remote sites (40-1, 40-2); and
performing at least one complex workflow operation on the local sites (30-1, 30-2) and remote sites (40-1, 40-2).

5. Method according to any one of the preceding claims, wherein coordinating the request further comprises:
by using a first distribution mode (110) of the service coordination layer (10), distributing the request (52, 54) from a local site (30-1) of the local sites and remote sites to at least one of the remote sites (40-1, 40-2).

6. Method according to any one of the preceding claims, wherein coordinating the request further comprises:
by using a second distribution mode (120) of the service coordination layer (10), distributing the request (52, 54) along a chain of at least some of the local sites (30-1) and remote sites (40-1, 40-2).

7. Method according to any one of the preceding claims, wherein coordinating the request further comprises:
by using a third distribution mode (130) of the service coordination layer (10), hierarchically sorting the one or more local sites (30-1, 301, 302, 303, 304) and remote sites (40-1, 40-2, 401, 402, 403, 404, 405).

8. Method according to any one of the preceding claims, wherein the response (60, 64) is combined from a plurality of responses provided by each of the at least one local sites and remote sites.

9. Method according to any one of the preceding claims, wherein the service coordination layer (10) is integrated into each of the local sites (30-1, 30-2) and remote sites (40-1, 40-2).

10. Computer program product comprising computer readable instructions, which when loaded and run in a computer and/or computer network system, causes the computer system and/or the computer network system to perform operations according to a method of anyone of the preceding claims.

11. Service coordination layer (10) for a distributed system (100) for data retrieval, archiving, and replication, the service coordination layer (10) comprising one or more modules (31, 41; 11, 30-1a, 40-1a, 40-2a; 12) for coordinating a request (52, 54) between at least one caller (22, 24) and one or more local sites (30-1, 30-2) and remote sites (40-1, 40-2) and wherein the service coordination layer (10) is operable to:
receive at least one request (52, 54) from the caller (22, 24);
send the request (52, 54) to at least some of the local sites (30-1) and remote sites (40-1, 40-2) by using at least one of the modules (31, 41; 11, 30-1a, 40-1a, 40-2a; 12);
receive a response (60) from the at least some of the local sites (30-1) and remote sites (40-1, 40-2); and
send the response (60) to the caller (22, 24).

12. Service coordination layer according to claim 11 further operable to send the request (52, 54) to at least some of the local sites (30-1) and remote sites (40-1, 40-2) based upon:
the request (52, 54);
the caller (22, 24);
at least one data manipulation operation comprised in the request (52, 54); and/or
at least one data object exchanged between the caller (22, 24) and the at least some of the local sites (30-1) and remote sites (40-1, 40-2).

13. Service coordination layer according to claim 11 or 12, wherein the one or more modules (31, 41; 11, 30-1 a, 40-1a, 40-2a; 12) are further operable to coordinate the request (52, 54) by:
performing at least one data manipulation operation on the local sites (30-1) and remote sites (40-1, 40-2).

14. Service coordination layer according to claim 13, wherein the one ore more modules (31, 41; 11, 30-1 a, 40-1 a, 40-2a; 12) are further operable to perform at least one data manipulation operation by:
performing at least one read-only operation across the local sites (30-1, 30-2) and remote sites (40-1, 40-2);
performing at least one read-and-write operation on the local sites (30-1, 30-2) and remote sites (40-1, 40-2); and/or
performing at least one complex workflow operation on the local sites (30-1, 30-2) and remote sites (40-1, 40-2).

15. Service coordination layer according to any one of claims 11 to 14 further operable to:
distribute the request (52, 54) from a local site (30-1) of the local sites and remote sites to at least one of the remote sites (40-1, 40-2) by using a first distribution mode (110).

16. Service coordination layer according to any one of claims 11 to 15 further operable to:
distribute the request (52, 54) along a chain of at least some of the local sites (30-1) and remote sites (40-1, 40-2) by using a second distribution mode (120).

17. Service coordination layer according to any one of claims 11 to 16 further operable to:
hierarchically sort the one or more local sites (30-1, 301, 302, 304) and remote sites (40-1, 40-2, 401, 402, 403, 404, 405) by using a third distribution mode (130).

18. Service coordination layer according to any one of claims 11 to 17, wherein the response (60, 64) is combined from a plurality of responses provided by each of the at least one local sites (30-1) and remote sites (40-1, 40-2).

19. Service coordination layer according to any one of claims 11 to 18, wherein the service coordination layer (10) is integrated into each of the local sites (30-1, 30-2) and remote sites (40-1, 40-2).

20. Distributed system for data archiving, retrieval and replication, the system comprising:
a service coordination layer (10) according to any one of claims 11 to 19;
one or more local sites (30-1, 30-2) and remote sites (40-1, 40-2) connected to the service coordination layer (10); and
one or more callers (22, 24) operable to access the one or more local sites (30-1, 30-2) and remote sites (40-1, 40-2) through the service coordination layer (10).
